(19) **Europäisches Patentamt**

**European Patent Office**

**Office européen des brevets**

(11) Veröffentlichungsnummer: **0 108 423**
**B1**

(12) **EUROPÄISCHE PATENTSCHRIFT**

(45) Veröffentlichungstag der Patentschrift:
09.04.86

(51) Int. Cl.⁴: **B 29 C 63/06, B 29 C 65/02**

(21) Anmeldenummer: **83200729.8**

(22) Anmeldetag: **25.05.83**

(54) Verfahren und Vorrichtung zum fortlaufenden Ummanteln von Rohren aus Kunststoff mit einem Schutzmantel.

(30) Priorität: **14.09.82 DE 3233983**

(43) Veröffentlichungstag der Anmeldung:
**16.05.84 Patentblatt 84/20**

(45) Bekanntmachung des Hinweises auf die Patenterteilung:
**09.04.86 Patentblatt 86/15**

(84) Benannte Vertragsstaaten:
**AT BE CH DE FR GB IT LI LU NL SE**

(56) Entgegenhaltungen:
**EP - A - 0 030 091**
**EP - A - 0 044 668**
**GB - A - 2 038 444**
**US - A - 1 969 947**

(73) Patentinhaber: **REHAU AG + Co, Rheniumhaus,
D-8673 Rehau (DE)**

(72) Erfinder: **Riegel, Karl-Heinz, Dohlensteig 10,
D-8670 Hof/Saale (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

## Beschreibung

Die Erfindung betrifft ein Verfahren zum fortlaufenden Ummanteln von Rohren aus Kunststoff mit einem Schutzmantel, wobei der Schutzmantel um den Rohrumfang gelegt und in einem nachfolgenden Schweißvorgang in Einzelabschnitten mit dem Rohrumfang verbunden wird, wobei die ringförmigen Abschnitte der Verschweißung jeweils durch einen unverschweißten Umfangsbereich voneinander getrennt sind und wobei die überlappenden Enden des Schutzmantels während des Schweißvorgangs längs verlaufend durch Verschweißen miteinander verbunden werden.

Rohre aus Kunststoff, beispielsweise aus vernetzten Polyolefinen, werden u.a. als wasserführende Leitungen verwendet. Wenn solche Rohre in einem Gesamtsystem eingesetzt werden, bei dem auch metallische Teile verwendet werden, ist in der Vergangenheit die Eigenschaft der Sauerstoffdiffusion durch die Rohrwandungen in das transportierte Fluid negativ in Erscheinung getreten. Zu besonders schwerwiegenden Folgen hat diese Eigenschaft der Kunststoffrohre beispielsweise bei ihrem Einsatz in Heizsystemen - und hier besonders bei Fußbodenheizungen-geführt. Die in das Heizmedium durch die Rohroberflächen eindiffundierten Sauerstoffanteile haben die aus Stahl bestehenden und in direkter Berührung mit dem Heizmedium stehenden Kesselteile durch Korrosion angegriffen und teilweise unbrauchbar gemacht. Als weiteres negatives Merkmal trat die Schlammbildung durch Rostanfall innerhalb eines solchen geschlossenen Heizsystems in Erscheinung.

Man hat versucht, die negative Sauerstoffdiffusion durch die Rohrwandungen dadurch zu verhindern, daß man das Kunststoffrohr mit einer Aluminiumfolie als Sauerstoffsperre ummantelt hat. Auf die Dauer konnte dadurch jedoch die Sauerstoffdiffusion nicht ausgeschaltet werden, da bei Dauerbaanspruchung in der Aluminiumfolie Risse aufgetreten sind, durch welche der Sauerstoff wieder auf die Rohroberfläche gelangt und durch die Rohrwandung in das Heizmedium eingedrungen ist. Außerdem treten durch die Risse Feuchtigkeitspartikel an die Aluminiumschicht und zersetzen diese zu Aluminiumoxid.

Auch wenn die Aluminiumfolie mit einer äußeren Schutzschicht aus Kunststoff versehen war, sind diese negativen Erscheinungen nach relativ kurzer Einsatzzeit aufgetreten. Insbesondere die wechselnden Temperaturbeanspruchungen und die Biegungen bei der Verlegung der Rohre mit den dadurch geschaffenen Spannungsverhältnissen haben zu Rissen der Aluminiumfolie mit den oben geschilderten negativen Folgen geführt.

In der EP-A1- 0 044 668 ist eine sauerstoffdiffusionsverhindernde Ummantelung von Kunststoffrohren bekannt geworden, welche die geschilderten Nachteile des Standes der Technik vermeidet. Dabei wird die Schutzfolie um den Rohrumfang gelegt und in ringförmigen Abschnitten mit dem Rohrumfang verschweißt. Die ringförmigen Abschnitte der Ver-schweißung werden jeweils durch einen unverschweißten Umfangsbereich voneinander getrennt und die überlappenden Enden der Schutzfolie werden während des Schweißvorganges längs verlaufend durch das Verschweißen miteinander verbunden. Durch die abwechselnd am Rohrumfang angeordneten ringförmigen Abschnitte der Verschweißung und unverschweiß-ten Umfangsbereiche wird eine Flexibilität der Oberfläche der Schutzfolie geschaffen, die beispielsweise ein Brechen oder Reißen durch Umfangs- oder Wechseltemperaturbeanspruchungen verhindert. Die unverschweiß-ten Umfangsbereiche zwischen jeweils einem ringförmigen Abschnitt der Verschweißung schaffen eine Art Pufferzone, durch welche Längenausdehnungen bzw. -einschnürungen bei wechselnden Temperaturbeanspruchungen und Biegespannungen aufgenommen werden können. Die Schutzfolie dieser bekannten Anordnung kann beispielsweise aus mit einer Kunststoff-Deckschicht versehenen Metallfolie genauso bestehen wie aus einem Kunststoff-Folienlaminat, welches die Sauerstoff-Diffusion verhindert.

Die bekannte, abschnittsweise Aufbringung der Schutzfolie erfordert jedoch für eine optimale Verschweißung eine absolute Toleranzangleichung zwischen dem Rohrdurchmesser und dem Durchmesser des Umfangs-Schweißwerkzeuges. Nur wenn der Rohrdurchmesser einschließlich der auf den Rohrumfang aufgezogenen Schutzfolie toleranzmäßig ideal zum Durchmesser des Schweißwerkzeuges,paßt, ist eine einwandfreie Verschweißung möglich. Da jedoch in der Regel die Rohrdurchmesser in bestimmten Toleranzbereichen schwanken und auch die Dicke der Schutzfolie nicht auf einem Idealmaß gehalten werden kann, ergänzen sich u.U. die beiden Toleranzbereiche des Rohres und der Folie in einem Ausmaß, daß die Gesamttoleranz mit einem zweiteiligen Schweißwerkzeug der vorbekannten Art nicht mehr zu überbrücken ist. Wenn sich beispielsweise die Rohrtoleranz und die Folientoleranz in ihrem größtmöglichen Bereich addieren, kann sich das zweiteilige Schweißwerkzeug nicht mehr vollständig schließen, während sich bei einem Zusammentreffen der kleinsten Toleranzbereiche im Rohr und in der Schutzfolie die zweiteilige Form zwar schließt, jedoch der notwendige Schweißdruck nicht mehr auf die Rohroberfläche aufgebracht werden kann.

Damit ist die Produktionssicherheit bei diesem bekannten Verfahren nicht gegeben.

Hier setzt die Erfindung ein, die es sich zur Aufgabe gestellt hat, ein Verfahren und eine Vorrichtung anzugeben, mit welchen die aufgetretenen Nachteile des Standes der Technik vermieden und insbesondere eine Lösung gefunden wird, die auch in gegensätzlichen Toleranzbereichen ein festes Anlegen der als Schutzmantel dienenden Schutzfolie in rippenförmigen Abständen voneinander am Rohrumfang durch Verschweißen ermöglicht. Erfindungs-gemäß wird dazu vorgeschlagen, daß der Schutzmantel in einem ersten Verfahrensschritt über wesentliche Teilbereiche der Einzelabschnitte mit dem Rohrumfang verschweißt und in einem unmittelbar danach folgenden zweiten Verfahrensschritt in überlappendem Schweißeingriff mit den Teilbereichen des ersten Verfahrensschrittes auch die dabei nicht erfaßten Bereiche der Einzelabschnitte mit dem Rohrumfang endverschweißt werden.

Eine Vorrichtung zur Durchführung des erfindungsgemäßen Verfahrens besteht aus einem den Schutzmantel um den Rohrumfang legenden Vorrichtungsteil und einem Schweißwerk-zeug mit geteilten Schweißbacken und mehreren hintereinander angeordneten Schweißrippen, welches im Takt des Schweißvorganges von einem Anfangspunkt bis zu einem Endpunkt am Rohrumfang anliegend mitläuft und unmittelbar nach Erreichen des Endpunktes zum Anfangspunkt zurückkehrt, wobei der Schutzmantel im Takt des Schweißvorgangs durch Schweißwärme und Schweißdruck auf dem Rohrumfang festgelegt wird. Diese Vorrichtung ist erfindungs-gemäß gekennzeichnet durch einen definierten Abstand der Trennflächen der Schweißbacken voneinander und ein nachlaufendes zweites Schweißwerkzeug mit entsprechendem Trennflächenabstand seiner Schweißbacken, dessen Trennflächen in einem solchen Winkel zu den Trennflächen des ersten Schweißwerkzeuges angeordnet sind, daß auch die beim ersten Schweißvorgang nicht erfaßten Oberflächenbereiche des Schutzmantels im Schweißbereich des nachlaufenden zweiten Schweißwerkzeuges abgedeckt sind. Es hat sich hierbei als vorteilhaft erwiesen, daß die Trennflächen des zweiten Schweißwerkzeuges in einem Winkel von 90° zu den Trennflächen des ersten Schweißwerkzeu-ges angeordnet sind.

In einem anderen, zweckmäßigen Aufbau ist die erfindungs-gemäße Vorrichtung einstufig aufgebaut. Auch bei diesem Aufbau haben die Schweißbacken einen definierten Abstand im Trennflächenbereich. Zwischen dem Ausgangspunkt und dem Endpunkt des einzelnen Taktvorschubes ist hier jedoch ein Anschlag angeordnet, bei dessen Berührung das Schweiß-werkzeug mit seinen geteilten Schweißbacken vom Rohrumfang abhebt. Das Werkzeug wird danach um einen vorgegebenen Winkel gedreht und zur Beendigung des Schweißtaktes in überlappendem Schweißeingriff mit den schon verschweißten Bereichen der bei einem Schweißtakt zu erzielenden Einzelabschnitte unter Erfassung der nicht verschweißten Oberflächenbereiche des Schutzmantels auf dem Rohrumfang zurückgeführt.

Mit dem erfindungsgemäßen Verfahren wird das Toleranzproblem bei der abschnittsweisen Verschweißung des Schutzmantels auf dem Rohrumfang gelöst. Die Lösung liegt in der Zweiteilung des Schweißvorgangs, wobei im ersten Teil bereits wesentliche Teilbereiche der Einzelabschnitte verschweißt werden und wobei die nicht verschweißten Teilbereiche in dem nachfolgenden Verfahrensschritt endver-schweißt werden. Wesentlich hierbei ist, daß der zweite Verfahrensschritt in überlappendem Eingriff zu den Teilbereichen des ersten Verfahrensschrittes erfolgt.

Der Schutzmantel kann in Form einer Folie um den Rohrumfang herumgelegt werden. Dabei ist es zweckmäßig, das Schweißwerkzeug so auszulegen, daß bei der Ver-schweißung der Einzelabschnitte die überlappenden Enden des Schutzmantels längs verlaufend miteinander verschweißt werden. Es ist jedoch auch denkbar und liegt im Rahmen dieser Erfindung, den Schutzmantel beispielsweise durch Koextrusion über dem Kunststoffrohr anzuordnen. Hierbei würde der Schutzmantel im Durchmesser geringfügig größer ausgebracht als das übermantelte Rohr, um anschließend die Verschweißung gemäß der Erfindung durchführen zu können. Denkbar und im Rahmen der Erfindung möglich ist es ferner, den Schutzmantel abschnittsweise als Hüllschlauch über das Kunststoffrohr zu ziehen und danach den erfindungsgemäßen Schweißvorgang durchzuführen. Im Unterschied zu den beiden vorher beschriebenen kontinuierlichen Verfahren würde es sich dabei allerdings um ein diskontinuierliches Verfahren handeln.

Eine erfindungsgemäße Vorrichtung kann derart ausgelegt sein, daß das Werkzeugteil des ersten Verfahrensschrittes mit seinen Schweißrippen auf den maximalen Durchmesser ausgelegt ist, den das Kunststoffrohr und der Schutzmantel in ihren größten Toleranzbereichen bilden. Um eine saubere Verschweißung in den Anlagebereichen dieses ersten Teilwerkzeuges zu ermöglichen, wird das Werkzeug so ausgelegt, daß zwischen dem Oberteil und dem Unterteil der zweigeteilten Werkzeugform ein Spaltbereich frei gelassen ist, in dem eine Verschweißung nicht erfolgt. Er-findungsgemäß folgt auf dieses erste Teilwerkzeug, sobald es aus dem Schweißbereich abhebt und die zweigeteilte Form zurückfährt, unmittelbar ein zweites, ebenfalls zweiteiliges Schweißwerkzeug, welches eine zum ersten Teilwerkzeug versetzte Trennebene der beiden Werkzeughälften aufweist. Die Versetzung kann beispielsweise 90° betragen, was jedoch keine Bedingung ist. Wesentliche Voraussetzung für die Umfangsverschweißung ist lediglich, daß die Versetzung der Trennebene des zweiten Teilwerkzeuges so ausgelegt sein muß, daß die nicht verschweißte Teiloberfläche des Schutzmantels aus dem ersten Schweißvorgang durch das zweite Teilwerkzeug abgedeckt ist. Das zweite Teilwerkzeug ist im übrigen hinsichtlich der Schweißrippen genauso aufgebaut wie das erste Teilwerkzeug. Auch bei dem zweiten Teilwerkzeug wird zwischen der Ober- und der Unterform ein Spaltbereich frei gelassen. Mit dem zweiten Teilwerkzeug wird dieser offene Bereich aus dem ersten Schweißvor-gang ebenfalls dicht mit der Rohroberfläche verschweißt. Die längs verlaufende Verschweißung der überlappenden Enden der Schutzfolie ist zweckmäßigerweise bereits im ersten Teilwerkzeug angeordnet.

Wie oben beschrieben, kann die erfindungsgemäße Vorrichtung auch einstufig aufgebaut sein und erzielt in dieser Form den gleichen Erfolg.

Wesentliche Voraussetzung für eine erfolgreiche Durchführung des erfindungsgemäßen Verfahrens mit der dazugehörigen Vorrichtung ist, daß bei der Durchführung des Schweißvorganges die Schweißrippen des zweiten Teilwerkzeuges oder Schweißteiltaktes genau auf die ringförmige Teilschweißnähte treffen, die durch das erste Teilwerkzeug oder dem ersten Schweißteiltakt im ersten Schweiß-schritt eingebracht wurden. Bei der hier vorteilhaften kontinuierlichen Rohrproduktion, in deren Verlauf das erfindungsgemäße Schweißwerkzeug mit seinen zwei Teilbereichen oder Teiltakten eingesetzt ist, ist dies beispielsweise über eine Endschaltersteuerung zu erreichen, über welche der Mitlaufweg des Schweißwerkzeuges so eingestellt wird, daß nach dem Zurücklaufen in die Ausgangsposition beim Schließen des zweiten Teilwerkzeuges oder Durchführen des zweiten Teiltaktes die Schweiß-rippen genau auf die Schweißnähte des ersten Teilwerkzeuges oder Teiltaktes treffen.

Es ist jedoch im Rahmen der Erfindung auch möglich, daß neben einem solchen beweglichen Schweißwerkzeug mit seinen zwei Teilbereichen, von denen jeder eine zweigeteilte, bewegliche Werkzeugform aufweist, bzw. mit seinen zwei Teiltakten auch mit stehenden Schweißwerkzeugen und dafür mit einem Taktvorschub für das Rohr gearbeitet wird. Hier kann der Takt des Rohrvorschubs an die Länge des Schweißwerkzeuges derart angepaßt werden, daß jeweils die Schweißrippen des zweiten Teilwerkzeuges bzw. Teiltaktes genau in die Schweißnähte des ersten Teilwerkzeuges bzw. Teiltaktes treffen.

Ferner liegt es im Bereich der Möglichkeiten, das Schweiß-werkzeug mit seinen Teilbereichen oder Teiltakten als Formkette über den Rohrumfang umlaufen zu lassen. Eine solche Umlaufvorrichtung könnte erfindungsgemäß so aufgebaut sein, daß der Formkette mit dem Formhohlraum und den Schweißrippen für die Erstverschweißung eine zweite, beispielsweise senkrecht auf der Trennfläche der ersten Formkette angeordnete Formkette für die Endverschweißung zugeordnet ist. Bei allen diesen Werkzeugauslegungen ist es erforderlich, daß die Trennflächen zwischen den Teilwerkzeugen den erfindungsgemäßen Trennflächenabstand aufweisen, der auf jeden Fall so groß sein muß, daß bei der Verschweißung im ersten Verfahrensschritt bei allen denkbaren Toleranzen des Rohres und des Schutzmantels in den Trennflächenbereichen der beiden Werkzeughälften ein unverschweißter Teilbereich des Schutzmantels auf der Rohroberfläche verbleibt.

Dieser unverschweißte Teilbereich wird dann erfindungs-gemäß bei allen möglichen Werkzeugauslegungen im zweiten Verfahrensschritt mit der dafür vorgesehenen Werkzeugauslegung vorgenommen, wobei erfindungsgemäß die Schweißrippen des zweiten Teilwerkzeuges durch Steuerung exakt die ringförmigen Teilabschnitte der Verschweißung aus dem ersten Verfahrensschritt treffen und damit eine durchgehende ringförmige Umfangsverschweißung auf der Rohroberfläche ermöglichen.

In der Zeichnung ist eine Werkzeuganordnung der erfin-dungsgemäßen Vorrichtung schematisch dargestellt; es zeigen:

Fig. 1 ein Rohr mit den umfangsmäßig versetzt angeordneten Teilschweißwerkzeugen

Fig. 2 die Teilschweißwerkzeuge gemäß Fig. 1, bezogen auf den Rohrquerschnitt.

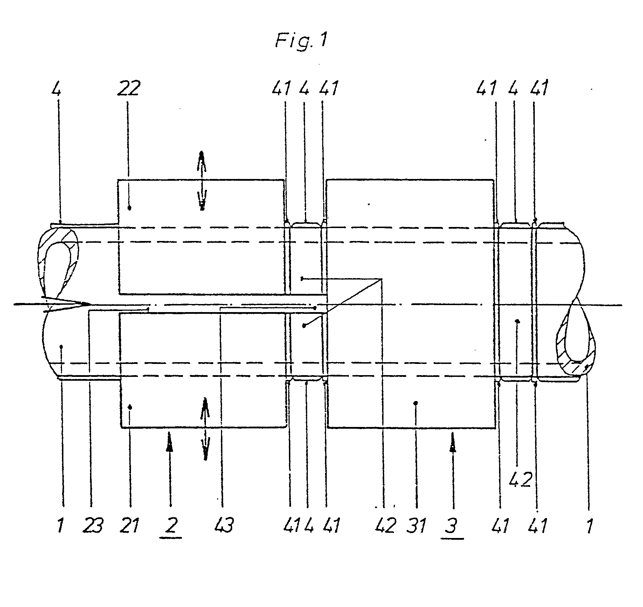

Die in Fig. 1 dargestellte Draufsicht des Rohres mit den umfangsmäßig versetzt angeordneten Teilwerkzeugen zeigt das Rohr 1 mit dem Teilwerkzeug 2 und dem Teilwerkzeug 3. Das Rohr 1 läuft in Pfeilrichtung von links nach rechts durch die Teilschweißwerkzeuge 2, 3. Das Teilschweißwerk-zeug 2 ist mit seinen beiden Werkzeughälften 21, 22 derart auf dem Rohrumfang dargestellt, daß die Trennfläche 23 sichtbar ist. Die Werkzeugteile 21, 22 heben in Pfeilrichtung jeweils entgegengesetzt bei Erreichen des in der Zeichnung nicht dargestellten Endschalters von der Rohroberfläche ab und geben damit den teilweise mit dem Rohrumfang verschweißten Schutzmantel für den Eingriff des Teilschweißwerkzeuges 3 frei. Das Teilschweißwerkzeug 3 ist in der Zeichnung lediglich mit seinem Werkzeugteil 31 zu sehen, da hier erfindungsgemäß eine Versetzung zur Trennfläche 23 des Teilschweißwerkzeuges 2 stattgefunden hat.

Im linken Bereich der Darstellung ist auf dem Rohrumfang der Schutzmantel 4 dargestellt. Der Schutzmantel 4 ist durch ein in der Zeichnung nicht gezeigtes Ummantelungsgerät um das Rohr herumgelegt. Zwischen den beiden Teilschweißwerkzeugen 2, 3 ist der Schutzmantel 4 sichtbar, wie er in den Bereichen 41 teilringförmig auf der Rohroberfläche durch Verschweißen über das Teilschweißwerk-zeug 2 festgelegt ist.

Der ringförmige Teilbereich 42, welcher nicht an der Rohroberfläche festgelegt ist, ist also jeweils von einer teilringförmigen Verschweißung 41 eingefaßt. Der ringförmige, nicht verschweißte Teilbereich 42 bildet somit das für die spätere Verwendung vorteilhafte Luftpolster zwischen dem Schutzmantel und der Rohroberfläche. Die ringförmigen Teilbereiche 42 sind durch den nicht ver-schweißten Teilabschnitt 43 getrennt, welcher durch den erfindungsgemäßen Zwischenraum 23 zwischen den Trennflächen der Werkzeughälften 21, 22 geschaffen ist.

Dieser nicht verschweißte Zwischenraum 43 wird durch das nachfolgende Teilschweißwerkzeug 3 endverschweißt, wobei dessen Schweißrippen genau in die ringförmigen Teilabschnitte 41 auf der Rohroberfläche eingreifen.

Der Rohrabschnitt auf der rechten Seite der gezeigten Darstellung hinter dem Teilschweißwerkzeug 3 zeigt den ringförmig auf dem Umfang des Rohres 1 festgelegten Schutzmantel 4 mit den durchgehend ringförmigen Umfangsabschnitten 41 der Verschweißung, welche zwischen sich einen nicht mit der Rohroberfläche verschweißten Ringbereich 42 einschließen.

Die Anzahl der Schweißrippen in den Teilschweißwerk-zeugen 2, 3, welche die ringförmigen Abschnitte 41 der Verschweißung schaffen, kann beliebig gewählt werden. Abhängigkeiten bestehen hierbei zur Fertigungsgeschwindigkeit des Kunststoffrohres 1, zur Dicke des verwendeten Schutzmantels, zur Vorschub- und Rückholsteuerung der Teilschweißwerkzeuge 2, 3 bzw. Teiltakte usw.

Die Bereiche der Verschweißung müsse nicht - wie dargestellt - ringförmig sein. Es liegt im Rahmen der Erfindung hier auch rautenförmige, zick-zack-förmige usw. Schweißbilder anzuwenden. Voraussetzung ist nur, daß sich Abschnitte der Verschweißung mit nicht verschweiß-ten Abschnitten abwechseln.

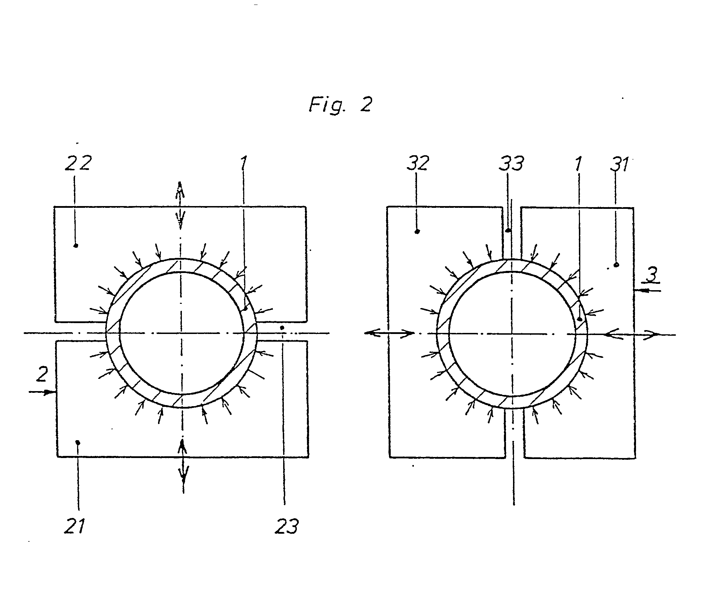

Fig. 2 zeigt die Teilschweißwerkzeuge 2, 3 mit den Teilwerkzeugen 21, 22, 31, 32. Die Pfeile entlang dem Rohrumfang verdeutlichen die Andruckkräfte, welche durch die Teilwerkzeuge 21, 22, 31, 32 jeweils definiert auf den Rohrumfang aufgebracht werden. Zwischen den Teilwerkzeugen 21, 22 und 31, 32 sind jeweils im Bereich der Trennflächen die Freiräume 23, 33 gelassen, in derem Bereich an der Rohroberfläche keine Verschweißung erfolgt. Das Teilschweißwerkzeug 3 ist in der gezeigten Darstellung mit seinen Trennflächen um 90° versetzt zu den Trennflächen des Teilschweißwerkzeuges 2 dargestellt. Die überlappende Endverschweißung des Schutzmantels ist in der Zeichnung nicht wiedergegeben, da diese durchgehende Verschweißung zum Stand der Technik zählt.

Die zweigeteilten Schweißwerkzeuge sind in der gezeigten Darstellung nur beispielhaft erwähnt. Die erfindungsge-mäße Vorrichtung kann auch derart aufgebaut sein, daß die Schweißwerkzeuge in mehr Teilwerkzeuge aufgeteilt sind als dargestellt. Hierbei können auch mehrere Zwischenräume 23 anfallen, die im zweiten Schweißgang - wie beschrieben - endgeschweißt werden.

## Patentansprüche

1. Verfahren zum Ummanteln von Rohren (1) aus Kunststoff mit einem Schutzmantel (4), wobei der Schutzmantel um den Rohrumfang gelegt und in einem nachfolgenden Schweiß-vorgang in Einzelabschnitten mit dem Rohrumfang verbunden wird, wobei die Einzelabschnitte der Ver-schweißung jeweils durch einen unverschweißten Umfangsbereich voneinander getrennt sind, und wobei ggf. die überlappenden Enden des Schutzmantels längs verlaufend miteinander verschweißt werden, dadurch gekennzeichnet, daß der Schutzmantel in einem ersten Verfahrensschritt über wesentliche Teilbereiche der Einzelabschnitte mit dem Rohrumfang verschweißt und in einem unmittelbar nachfolgenden zweiten Verfahrensschritt in überlappendem Schweißeingriff mit den Teilbereichen des ersten Verfahrensschrittes auch die dabei nicht erfaßten Bereiche der Einzelabschnitte mit dem Rohrumfang endverschweißt werden.

2. Vorrichtung zum Ummanteln von Rohren (1) aus Kunststoff mit einem Schutzmantel (4), bestehend aus einem den Schutzmantel um den Rohrumfang legenden Vorrichtungsteil und einem Schweißwerkzeug (2) mit geteilten Schweißbacken (21, 22) und mehreren hintereinander angeordneten Schweißrippen, welches im Takt des Schweißvorganges von einem Anfangspunkt bis zu einem Endpunkt am Rohrumfang anliegend mitläuft und unmittelbar nach Erreichen des Endpunktes zum Anfangspunkt zurückkehrt, wobei der Schutzmantel im Takt des Schweißvorganges durch Schweißwärme und Schweißdruck auf dem Rohrumfang festgelegt wird, gekennzeichnet durch einen definierten Abstand der Trennflächen (23), der Schweißbacken (21, 22) voneinander und ein nachlaufendes zweites Schweiß-werkzeug (3) mit entsprechendem Trennflächenabstand (33) seiner Schweißbacken (31, 32), dessen Trennflächen in einem solchen Winkel zu den Trennflächen des ersten Schweißwerkzeuges angeordnet sind, daß auch dia beim ersten Schweißvorgang nicht erfaßten Oberflächenbereiche des Schutzmantels im Schweißbereich des nachlaufenden zweiten Schweißwerkzeuges abgedeckt sind.

3. Vorrichtung nach Anspruch 2, dadurch gekennzeichnet, daß die Trennflächen des zweiten Schweißwerkzeuges in einem Winkel von 90° zu den Trennflächen des ersten Schweißwerkzeuges angeordnet sind.

4. Vorrichtung zum Ummanteln von Rohren (1), aus Kunststoff mit einem Schutzmantel (4), bestehend aus einem den Schutzmantel um den Rohrumfang legenden Vorrichtungsteil und einem Schweißwerkzeug (2) mit geteilten Schweißbacken (21, 22) und mehreren hintereinander angeordneten Schweißrippen, welches im Takt des Schweißvorganges von einem Anfangspunkt bis zu einem Endpunkt am Rohrumfang anliegend mitläuft und unmittelbar nach Erreichen des Endpunktes zum Anfangspunkt zurückkehrt, wobei der Schutzmantel im Takt des Schweißvorganges durch Schweißwärme und Schweißdruck auf dem Rohrumfang festgelegt wird, gekennzeichnet durch einen definierten Abstand der Trennflächen (23) der Schweißbacken (21,22) voneinander und einen zwischen dem Anfsngspunkt und dem Endpunkt des Taktvorschubes angeordneten Anschlag, bei dessen Berührung das Schweißwerkzeug (2) vom Rohrumfang abhebt, um einen vorgegebenen Winkel dreht und zur Beendigung des Schweißtaktes in überlappendem Schweißeingriff mit den schon verschweißten Bereichen der Einzelabschnitte unter Erfassung der nicht verschweiß-ten Oberflächenbereiche des Schutzmantels auf den Rohrumfang zurückführt.

## Claims

1. A method for the coating of pipes (1) made of plastic with a protective sheath (4), the sheath being placed round the circumference of the pipe and attached to the pipe circumference section by section in a subsequent welding process, where the individual welded sections are separated from each other by a non-welded part of the circumference and, where applicable, the overlapping ends of the protective sheath are longitudinally welded together, the method being characterized in that the protective sheath is, in a first stage of the method, welded to the pipe circumference along substantial part areas of the individual sections and, in a second stage of the method, following directly after the first stage, the previously not welded part areas of the individual sections are then welded to the pipe circumference by way of an overlapping welding procedure.

2. A device for the coating of pipes (1) made of plastic with a protective sheath (4), consisting of a part of the device which places the protective sheath on the pipe circumference and a welding tool (2) with split welding jaws (21, 22) and several welding ribs, arranged one behind the other, the welding tool moving along at the rhythm of the welding process, lying against the pipe circumference from a starting point to a finishing point and returning to the starting point immediately on reaching the finishing point, while the protective sheath is fixed by the welding heat and welding pressure excerted against the circumference of the pipe in the rhythm of the welding process, the device being characterized in that the opposite faces (23) of the welding jaws (21,22) are separated by a definable distance from each other and that a second welding tool (3) with a corresponding space between the opposite faces (33) of its welding jaws (31, 32), following after the first welding tool, is arranged with the facesat such an angle to the welding jaw faces of the first welding tool that even those surface areas of the protective sheath which were not taken in by the first welding process are within the welding area of the second welding tool following it.

3. A device according to Claim 2, characterized in that the opposite faces of the second welding tool jaws are arranged at an angle of 90° to the opposite faces of the jaws of the first welding tool.

4. A device for the coating of pipes (1) made of plastic with a protective sheath (4), consisting of a part of the device which places the protective sheath on the pipe circumference and a welding tool (2) with split welding jaws (21, 22) and several welding ribs, arranged one behind the other, the welding tool moving along at the rhythm of the welding process, lying against the pipe circumference from a starting point to a finishing point and returning to the starting point immediately on reaching the finishing point, while the protective sheath is fixed by the welding heat and welding pressure exerted against the circumference of the pipe in the rhythm of the welding process, the device being characterized in that the opposite faces (23) of the welding jaws (21, 22) are separated by a definable distance from each other and that a stop is arranged between starting point and finishing point of the welding step of the rhythm, so that, when the stop is touched, the welding tool (2) is lifted off the pipe circumference and turned by a specified angle, and returned,so as to complete the welding of the individual sections by overlap welding to the already welded areas of the individual sections, taking in the not yet welded surface areas of the protective sheath on the circumference of the pipe.

## Revendications

1. Méthode pour le revétement de tuyaux (1) en matière plastique d'une enveloppe protectrice (4), l'enveloppe étant posée sur le pourtour du tuyau et reliée à ce pourtour en sections individuelles par procédé de soudure consécutif, les sections individuelles de soudure étant séparées dans chaque cas par un secteur de pourtour non soudé, et le cas échéant, les bouts en recouvrement de l'enveloppe protectrice étant soudés ensemble en long, caractérisée par le fait que l'enveloppe protectrice est soudée au pourtour du tuyau en une première étape de procédé portant sur des zones partielles essentielles des sections individuelles et qu'en une seconde étape immédiatement subséquente les secteurs non touchés des sections individuelles sont aussi soudés sur le pourtour du tuyau par soudure à recouvrement avec les zones partielles de la première étape du procédé.

2. Dispositif pour le revétement de tuyaux (1) en matière plastique d'une enveloppe protectrice (4), comprenant un mécanisme plaçant l'enveloppe protectrice sur le pourtour du tuyau et un outil de soudure (2) à machoires divisées (21,22) ainsi que plusieurs nervures successives, outil qui avance à la cadence de l'opération de soudure depuis un point de départ jusqu'à un point extréme, en contact avec le pourtour du tuyau, et retourne au point de départ dès atteinte du point extréme, l'enveloppe protectrice étant fixée au pourtour du tuyau par chaleur et pression de soudure à la cadence de l'opération de soudure, caractérisé par un écart défini des surfaces de séparation (23) des mâchoires (2i,22) et un second outil de soudure (3) consécutif avec écart conforme des surfaces de séparation (33) de ses mâchoires (31,32), dont les surfaces de séparation sont disposées dans un tel angle par rapport aux surfaces de séparation du premier outil de soudure que les zones superficielles de l'enveloppe protectrice non couvertes lors de la première opération de soudure soient également comprises dans la zone de soudure du second outil qui suit.

3. Dispositif suivant revendication 2, caractérisé par le fait que les surfaces de séparation du second outil de soudure sont disposées dans un angle de 90° par rapport aux surfaces de séparation du premier outil de soudure.

4. Dispositif pour le revétement de tuyaux (1) en matière plastique d'une enveloppe protectrice (4), comprenant un mécanisme plaçant l'enveloppe protectrice sur le pourtour du tuyau et un outil de soudure (2) à mâchoires divisées (21,22), ainsi que plusieurs nervures successives, outil qui avance à la cadence de l'opération de soudure depuis un point de départ jusqu'à un point extrême, en contact avec le pourtour du tuyau, et retourne au point de départ dès atteinte du point extrême, l'enveloppe protectrice étant fixée au pourtour du tuyau par chaleur et pression de soudure à la cadence de l'opération de soudure, caractérisé par un écart défini des surfaces de séparation (23) des mâchoires (21,22) et une butée disposée entre le point de départ et le point extrême de l'avancement cadencé, au contact de laquelle l'outil de soudure (2) est relevé du pourtour du tuyau, tourné d'un angle préréglé et ramené sur le pourtour du tuyau pour achever le cycle de soudure par recouvrement avec les zones déjà soudées des sections individuelles, tout en englobànt les zones superficielles non soudées de l'enveloppe protectrice.

Fig.1

Fig. 2